# EUROPÄISCHE PATENTANMELDUNG

(11) **EP 1 607 854 A2**
(43) Veröffentlichungstag der Anmeldung: **21.12.2005**
(21) Anmeldenummer: 05105170.4
(22) Anmeldetag: 13.06.2005
(51) Int. Cl.: G06F 3/033

(54) **Verfahren und Computerprogramm zur grafischen Darstellung von Gegenständen und technischen Prozessen auf einem Bildschirm**

(30) Priorität: 15.06.2004 DE 102004028792
(71) Anmelder: SIEMENS AKTIENGESELLSCHAFT, 80333 München (DE)
(72) Erfinder: Pfahlmann, Lothar, 91083, Baiersdorf (DE)

(57) **Zusammenfassung**

Die Erfindung betrifft ein Verfahren zur grafischen Darstellung von Gegenständen und/oder technischen Prozessen auf einem Bildschirm, sowie das das Verfahren realisierende Computerprogramm. In diesen Fällen werden häufig verschiedene Ansichten oder Perspektiven gewählt welche in verschiedenen Anzeigefenstern dargestellt werden. Um die Gesamtheit aller Ansichten zu editieren oder nachfolgend anzuschauen ist insofern ein häufiger Sichtwechsel erforderlich. Derartige Sichtwechsel sind jedoch umständlich und lästig, und kosten auch Zeit. Um dieses Problem zu lösen wird die Anzeigefläche (3) eines grafischen Editors mit mindestens einem, mittels eines Eingabegeräts (5) aktivierbaren Elements (4) ausgestattet. Durch die Aktivierung des Elements (4) wird der Inhalt der Anzeigefläche (3) um ein Grafikobjekt (6) ergänzt oder gemindert. Auf diese Weise wird ein häufiger Sichtwechsel vermieden was ein ergonomisches Arbeiten ermöglicht.

## Beschreibung

Die Erfindung betrifft allgemein die Darstellung von Bildschirminhalten durch Computer und hierzu geeignete Anzeigeprogramme. Insbesondere betrifft die Erfindung die grafische Darstellung von Gegenständen oder technischen Verfahren durch grafische Editoren.

Die Veranschaulichung technischer Prozesse oder technischer Gegenstände erfolgt meist in Form von technischen Zeichnungen, Flussdiagrammen und so weiter. Um der Dreidimensionalität der Gegenstände Rechnung zu tragen, oder die genannten Prozesse umfassend darzustellen, werden im Regelfall mehrere Darstellungen gewählt. Man wählt für Gegenstände häufig verschiedene Ansichten, so beispielsweise eine perspektivische Ansicht, eine Seitenansicht, oder eine Aufsicht des Gegenstandes, oder fertigt Schnitte entlang vorbestimmter Linien an. Bei Prozessen, das heißt Arbeits- oder Herstellungsverfahren, sind meist Darstellungen in mehreren Abstraktionsebenen erforderlich. So kann eine erste Darstellung gewählt werden um den gesamten Prozess, zum Beispiel in Form eines Flussdiagramms, zu zeigen. Eine zweite Darstellung kann einen Teilprozess darstellen, welcher beispielsweise ein einzelner Verarbeitungsschritt im gesamten Prozess ist, und welcher einem Element im Flussdiagramm entspricht.

Da die Bildschirmfläche begrenzt ist, muss beim Erstellen der verschiedenen Darstellungen meist ein Wechsel zwischen diesen Ansichten vorgenommen werden. Hierbei werden grafische Editoren eingesetzt, mit denen verschiedene Ansichten in größenveränderlichen Fenstern dargestellt werden. Durch Auswahl entsprechender Einträge in aufklappbaren Menüs des jeweiligen Editors werden die Ansichten ausgewählt, Fenster in den Vordergrund gerückt, und in ihrer Größe eingestellt.

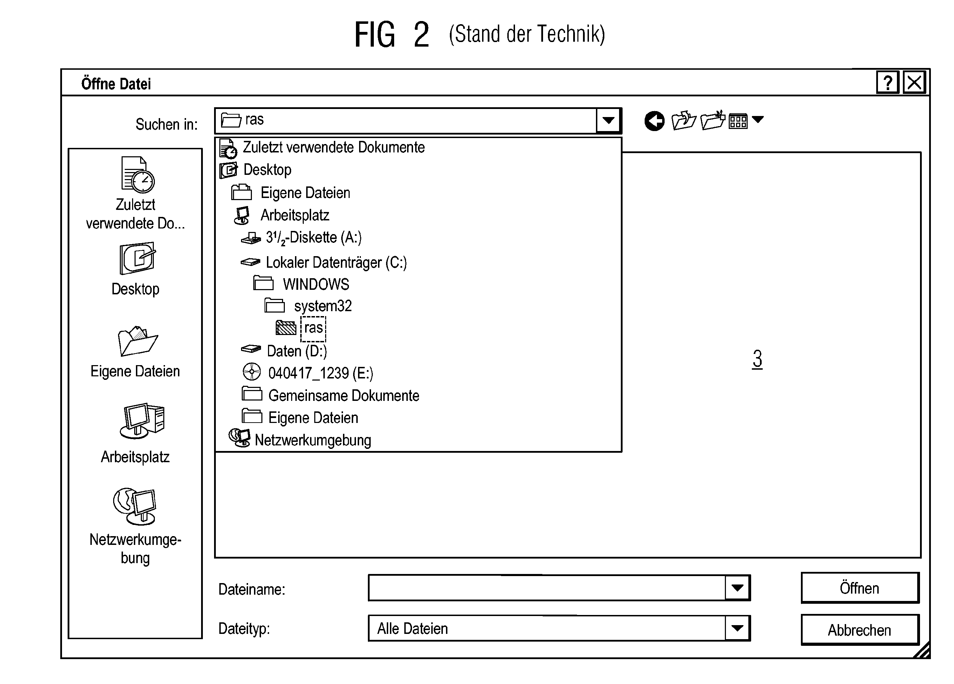

Zur strukturierten Anzeige zusammenhängender Testinformationen sind Tree-Controls allgemein bekannt. Bei einem Tree-Control werden Textinformationen in einer hierarchischen, baumartigen Liste angeordnet. Die Einträge im Tree-Control können beispielsweise Namen von Dateien und Ordnern auf einer Computerfestplatte sein. Wird der Tree-Control in einer Anzeigefläche, beispielsweise einem Anzeigefenster in einer grafischen Benutzeroberfläche, angezeigt, und klickt man mit einem Mauszeiger auf ein Ordnersymbol, so erscheint, meist mit geringem seitlichen Versatz, eine Aufstellung von Grafikobjekten. Jedes Grafikobjekt repräsentiert eine Datei welche in dem Ordner abgelegt ist. Dies veranschaulicht Figur 2. Die Anzeigefläche 3 erscheint beim Betriebssystem Windows XP, wenn man auf der Betriebssystemebene nach einer Datei sucht. Durch Anklicken auf die Zeile "Lokaler Datenträger (C:)" erscheint ein zusätzliches Grafikobjekt in Form eines Ordnersymbols mit der Bezeichnung "Windows". Die unterhalb der Zeile "Lokaler Datenträger (C:)" angeordneten Inhalte ab derjenigen Zeile, die mit "Lokaler Datenträger (D:)" bezeichnet ist, werden hierbei nach unten verschoben. Entsprechendes gilt, wenn auf das Ordnersymbol mit der Beschriftung "system32", bzw. die Beschriftung selbst, geklickt wird.

Der Erfindung liegt die Aufgabe zu Grunde, eine ergonomische Veranschaulichung technischer Gegenstände oder technischer Prozesse mit mehreren Darstellungen an einem Bildschirm zu ermöglichen.

Die Lösung dieses technischen Problems erfolgt durch die Merkmale der unabhängigen Ansprüche. Vorteilhafte Weiterbildungen werden durch die Merkmale der abhängigen Ansprüche wiedergegeben oder lassen sich der Beschreibung in Verbindung mit den Figuren entnehmen.

Erfindungsgemäß wurde erkannt, dass sich das oben genannte Problem dadurch lösen lässt, dass die Anzeigefläche mindestens über ein, mittels eines Eingabegerätes aktivierbares Element verfügt, und dass durch die Aktivierung des Elements der Inhalt der Anzeigefläche um ein Grafikobjekt ergänzt wird.

Bei grafischen Benutzeroberflächen wie beispielsweise Apple Macintosh® oder Microsoft Windows®, verwenden Programme Anzeigeflächen um mit dem Benutzer zu interagieren. Diese Anzeigeflächen sind häufig Anzeigefenster, dessen Inhalte durch Scrollen mit Hilfe eines Eingabegerätes von oben nach unten durchgesehen werden können. Derartige Anzeigefenster werden beispielsweise vielfach von grafischen Editoren eingesetzt um technische Prozesse darzustellen oder Gegenstände in verschiedenen Ansichten zu fixieren.

Eine derartige Anzeigefläche verfügt im Sinne der vorliegenden Erfindung über mindestens ein aktivierbares Element. Dies ist ein Teilbereich der Anzeigefläche bzw. ein Flächenelement, welches mittels eines Eingabegeräts durch den Benutzer ausgewählt werden kann. Als Eingabegerät kann eine Computermaus, ein Trackball, ein Lichtgriffel, ein Joystick, ein Grafiktablett oder dergleichen eingesetzt werden, mit dessen Hilfe das Element selektiert wird. Die Selektion des Elements kann beispielsweise dadurch erfolgen, dass der Benutzer unter Bewegung der Computermaus den Mauszeiger auf das Element führt und durch Anklicken aktiviert.

Erfolgt die Aktivierung, wird die Anzeigefläche als solches nicht geändert, das heißt seine äußeren Abmessungen und sonstigen Eigenschaften bleiben gleich. Es tritt auch keine weitere Anzeigefläche hinzu. Durch die Aktivierung verändert sich lediglich der grafisch dargestellte Inhalt der Anzeigefläche. Der Inhalt wird mittels des Grafikobjekts inhaltlich ergänzt.

Die inhaltliche Ergänzung des Inhalts der Anzeigefläche ist im Regelfall dergestalt, dass die Anzeigefläche und das Grafikobjekt denselben Gegenstand und/oder denselben Prozess zum Inhalt haben.

Stellt die Anzeigefläche beispielsweise einen Gegenstand dar, so kann durch Aktivierung des Elements eine weitere Darstellung in einer anderen Perspektive bereitgestellt werden. So kann die Anzeigefläche den Gegenstand zunächst in einer perspektivischen Ansicht zeigen, wohingegen das Grafikobjekt denselben Gegenstand in einer Aufsicht oder anderweitig zeigt. Es ist auch möglich, dass unter Beibehaltung der Perspektive mittels des Grafikobjekts lediglich Details des Gegenstandes dargestellt werden, bzw. dass der Gegenstand oder Teile des Gegenstandes unter einem verkleinerten Maßstab her betrachtet werden. Selbstverständlich ist es auch möglich, dass diese beiden Maßnahmen kombiniert werden, beispielsweise dadurch, dass mittels des Grafikobjekts Details desselben Gegenstandes aus einer im Vergleich zu Anzeigefläche anderen Perspektive gezeigt werden.

Wird durch die Anzeigefläche ein technischer Prozess veranschaulicht, beispielsweise ein Herstellungs- oder ein Arbeitsverfahren, so kann mit dem Grafikobjekt eine andere Abstraktionsebene des Prozesses beleuchtet und grafisch dargestellt werden. Diese andere Abstraktionsebene kann beispielsweise Einzelheiten eines oder mehrerer Prozessschritte des in der Anzeigefläche gezeigten Gesamtprozesses zeigen. Auch kann das Grafikobjekt einen oder mehrere Verfahrensschritte des Gesamtverfahrens detailreicher darstellen, oder aber hinterlegte Zusatzinformationen anzeigen. Im letztgenannten Fall kann beispielsweise die zum jeweiligen Verfahrenschritt benötigte Prozesszeit angezeigt werden um den Gesamtprozess in zeitlicher Hinsicht zu optimieren.

Die obigen Ausführungen machen plausibel, dass durch ein mittels eines aktivierbaren Elements ergänztes Anzeigefenster Wechsel zwischen verschiedenen Ansichten des Gegenstandes beziehungsweise des technischen Prozesses unter Zuhilfenahme mehrerer Anzeigeflächen bzw. Anzeigefenster vermieden, oder zumindest eingeschränkt werden kann. Es tritt hinzu, dass das Herbeiholen weiterer grafischer Informationen unter Verwendung eines oder mehrerer Grafikobjekte hierbei besonders einfach ist und besonders schnell erfolgt. Mehrere technisch zusammenhängender Darstellungen werden unter Zuhilfenahme eines oder mehrerer aktivierbarer Elemente inhaltlich zusammengefasst und miteinander verknüpft. Auf diese Weise ist die Handhabung der grafischen Informationen einfacher, der Bedienkomfort höher, und die Wahrscheinlichkeit, Fehler zu machen, geringer.

Ebenso wie über die Aktivierung des Elements der Inhalt der Anzeigefläche ergänzt wurde, ist es umgekehrt auch möglich, durch erneute Aktivierung des Elements das Grafikobjekt bzw. die Inhaltsergänzung zu entfernen. Insofern genügt ein einfacher Mausklick um gegenwärtig nicht gewünschte Zusatzinformationen schnell weg zu blenden.

Bevorzugterweise ist das Grafikobjekt bzw. sein Inhalt ebenso editierbar bzw. modifizierbar wie der restliche Inhalt der Anzeigefläche. Wird das Grafikobjekt vom Benutzer modifiziert, und durch Anklicken des dem Grafikobjekt zugeordneten Elements zum Verschwinden gebracht, so geht dieses Verschwinden in der Regel mit einem Abspeichern des Grafikobjektinhalts einher. Wird zu einem späteren Zeitpunkt das besagte Element erneut aktiviert, so ist zukünftig der Inhalt der Anzeigefläche mit dem modifizierten Grafikobjekt ergänzbar.

Wird der Inhalt der Anzeigefläche mit dem Grafikobjekt ergänzt, so ergibt sich das praktische Problem, wie und wo das Grafikobjekt positioniert werden soll. Um zusätzliche Informationen zu liefern sollte es den bereits vorhandenen Inhalt nicht überlagern bzw. verdecken, sondern so angeordnet werden, dass auch die bisher dargestellten Komponenten des Gegenstandes beziehungsweise des technischen Verfahrens unverändert dargestellt werden.

Um dieses Ziel zu erreichen erfolgt die Positionierung des Grafikobjekts zunächst in unmittelbarer Nähe zum aktivierten Element. Ist dort genügend Platz, so stellt die Positionierung des Grafikelements kein Problem dar. Wenn aber das Grafikobjekt einen Teil des bisherigen Inhalts der Anzeigefläche überlagern würde wird so vorgegangen, dass mit der Positionierung des Grafikobjekts innerhalb der Anzeigefläche deren bisheriger Inhalt ab der Sollposition des Grafikobjekts abwärts nach unten verschoben wird. Die Positionierung des hinzutretenden Grafikobjekts erfolgt damit in der Art eines Tree-Controls.

Das erfindungsgemäße Verfahren eignet sich hervorragend zur Veranschaulichung von technischen Prozessen, und hierbei insbesondere zur Veranschaulichung des funktionsmäßigen, organisatorischen, und/oder zeitlichen Ablaufs eines Herstellungs-oder Arbeitsprozesses.

Die praktische Durchführung des Programms erfolgt am besten mittels eines grafischen Editors, also eines Computerprogramms, welches auf einem Standard-PC laufen kann. Das Computerprogramm wird hierbei direkt in den internen Speicher wie beispielsweise dem RAM des digitalen Computers geladen, und umfasst in seinem Quellcode Abschnitte, bzw. umfasst Softwarecodeabschnitte, mit denen das Verfahren ausgeführt werden kann, wenn es auf dem besagten Computer läuft. Das Computerprogramm kann, wie allgemein üblich, in einem Computerspeicher abgelegt werden, auf einem Datenträger verkörpert sein, oder mittels eines elektrischen Trägersignals übertragen werden. Die Übertragung kann hierbei in einem Computernetzwerk erfolgen, beispielsweise in einem LAN (von englisch local area network), in einem WAN (von englisch wide area network), oder im Internet.

Nachfolgend soll das vorliegende Verfahren sowie der zugehörige Editor anhand von Ausführungsbeispielen in Verbindung mit den Zeichnungen näher erläutert werden. Hierbei zeigt
- Figur 1:: einen Arbeitsplatz für die Verwendung des grafischen Editors nach dem Stand der Technik,
- Figur 2:: ein Tree-Control nach dem Stand der Technik,
- Figur 3:: Anzeigeflächen eines grafischen Editors nach dem Stand der Technik,
- Figuren 4 bis 8:: Anzeigeflächen des grafischen Editors gemäß eines Ausführungsbeispiels der vorliegenden Erfindung.

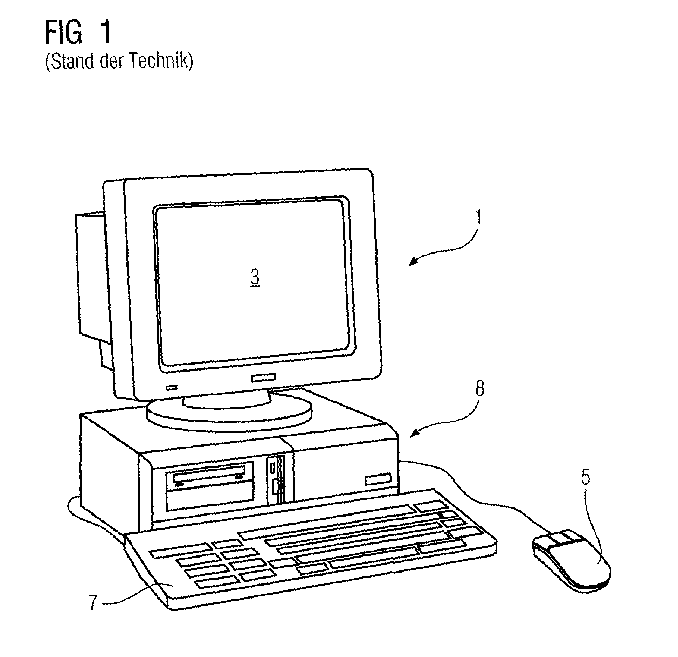

Figur 1 zeigt in einer perspektivischen Ansicht das Anwendungsgebiet der vorliegenden Erfindung, nämlich die Darstellung von Bildschirminhalten durch einen Computer 8. Der Computer 8 verfügt über eine Maus 5 und überträgt darzustellende Daten zu einem Bildschirm 1. Der Bildschirm 1 stellt die Daten in einem oder mehreren Anzeigefenstern 3 dar.

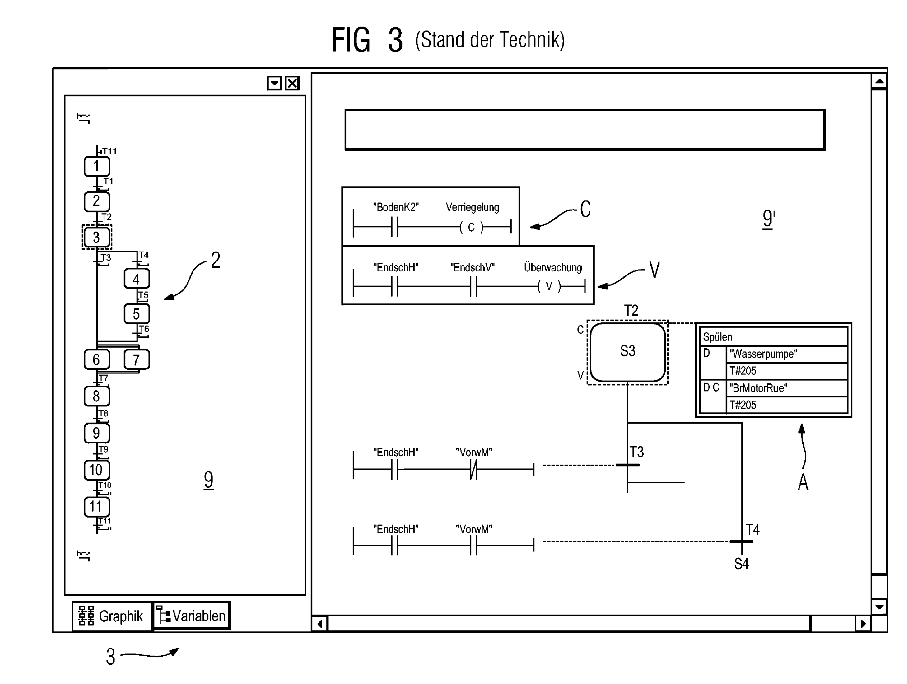

Figur 3 zeigt ein Anzeigefenster 3 nach dem Stand der Technik. Es handelt sich hierbei um ein Fenster 3 des grafischen Editors S7GRAPH, der von der Anmelderin kommerziell vertrieben wird, und der unter dem Betriebsystem Microsoft Windows® läuft.

Das Anzeigefenster 3 ist zweigeteilt. Die linke Fensterhälfte 9 zeigt eine erste Darstellung eines Arbeitsprozesses in einer Übersichtsdarstellung. Prozessschritte 1 bis 11 sind in der Art einer Kette untereinander angeordnet, wobei sie teilweise einen seitlichen Versatz zeigen. Die Prozessschritte repräsentieren Stationen S1, S2, ... S11 in einer Waschstraße. Diese Stationen sind S1 (Eintritt in die Waschanlage), S2 (Beginn der Autowäsche), S3 (Spülen), S4 (Vorwäsche), S5 (Zurück), S6 (Hauptwäsche), S7 (Unterbodenwäsche), und S8 (Klarspülen), S9 (Trocknen) S10 und S11. Die rechte Fensterhälfte 9' zeigt in einer zweiten Darstellung denselben Arbeitsprozess, zeigt jedoch Details zum Verfahrensschritt S3, worauf nachfolgend noch näher eingegangen wird.

Um den Aufenthaltsort eines Fahrzeugs innerhalb der Waschstraße eindeutig zu identifizieren, aber auch um den Status von Anlagenkomponenten zu ermitteln, gibt es zwischen den Fahrzeugstationen in der Waschstraße abfragbare Sensoren. Mit Hilfe dieser Sensoren kann abgefragt werden, ob gewisse Bedingungen, vorliegend Transitionsinhalte T1, T2 ... genannt, erfüllt sind. Beispielsweise kann über einen solchen Transitionsinhalt abgefragt werden, ob ein Fahrzeug in die Waschstraße hineingefahren ist. Ein anderer Transitionsinhalt wäre, ob eine Waschbürste in seine Sollposition geschwenkt wurde, oder ob eine Unterbodenwäsche gestartet wurde.

Weiterhin gibt es bzgl. jeder Station ein oder mehrere Verriegelungsbedingungen C. So kann abgefragt werden, ob eine Schutzvorrichtung aktiviert wurde oder nicht, so dass die zugehörige Verriegelungsbedingung entweder erfüllt ist oder nicht. Beispielsweise kann abgefragt werden, ob ein Schutzgitter in eine Sollposition bewegt wurde, oder ob ein Notschalter gedrückt wurde.

Weiterhin gibt es Überwachungsbedingungen V, mit deren Hilfe unterschiedliche Überwachungen programmiert werden können, beispielsweise maximale Überwachungs- bzw. Verweilzeiten zu den jeweiligen Schritten.

Ferner gibt es programmierbare Aktionen A, die beispielsweise einem Verfahrensschritt zugeordnet sind. So kann durch Setzen eines geeigneten Bits in der Hardware-Steuereinrichtung der Waschstraße die Aktion festgelegt werden, dass ein Gebläse eine vorbestimmte Zeit arbeitet, dass eine Pumpe eine vorgegebene Zeit zugeschaltet wird, etc.

Bei der grafischen Darstellung des Ablaufs einer Fahrzeugwäsche in der Waschanlage sind die Überwachungsbedingungen V, die Verriegelungsbedingungen C, und die Aktionen A von besonderem Interesse. Soll beispielsweise bei einer Fehlersuche herausgefunden werden, warum die Station S3 nicht mehr ordnungsgemäß funktioniert, so benötigt man neben einer in einem Fenster 9 gezeigten Übersichtsdarstellung auch die Detailinformationen zu den Überwachungsbedingungen V, den Verriegelungsbedingungen C, sowie den Aktionen A.

Aus Figur 3 ist ersichtlich, dass nach dem Stand der Technik die zu einem Arbeitsschritt S1, S2, ... hinterlegten Inhalte, nämlich die Transitionsinhalte T, die Verriegelungsbedingungen C, die Überwachungsbedingungen V, und die Aktionen A in einer oder mehreren Einzelblattdarstellungen 9' gemäß der rechten Hälfte der Anzeigefläche 3 separat dargestellt werden, und es zusätzlich die Gesamtdarstellung 9 in der linken Hälfte der Anzeigefläche gibt. Für den genannten Fall der Fehlersuche sind somit zusätzliche Ansichten erforderlich. In der Fensterhälfte 9' der Figur 3 beispielsweise sind noch die Verriegelungsbedingungen C, die Überwachungsbedingungen V, und die Aktionen A zum Verfahrensschritt S3 vermerkt. Diese Inhalte sind fest vorgegeben. Will man andere Inhalte im Fenster angezeigt bekommen, so muss man diese Inhalte durch Anklicken in aufklappbaren Menüs des Editors aufwändig definieren um sie anschließend anzeigen zu lassen.

In anders gelagerten Fällen sind vier oder noch mehr Fenster vonnöten, was die Handhabung schnell unübersichtlich werden lässt.

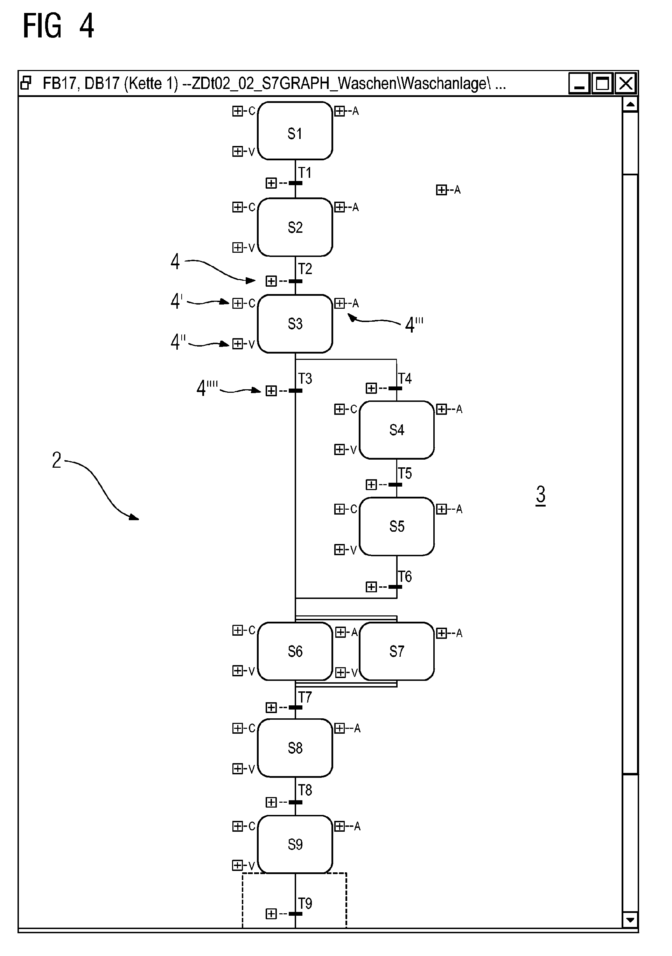

Die Figuren 4 bis 8 zeigen die Vorgehensweise nach dem erfindungsgemäßen Verfahren bzw. dem hierzu verwendeten grafischen Editor. Als Editor wird wiederum S7GRAPH verwendet, jedoch in modifizierter Form.

Figur 4 zeigt hierbei zunächst die Übersichtsdarstellung desselben Prozesses 2 wie in Figur 3 in einer Übersichtsdarstellung, also vergleichbar zur linken Fensterhälfte 9 in Figur 3. Im Unterschied zur Fensterhälfte 9 von Fig. 3 sind die Symbole für die einzelnen Stationen S1, S2 bis S9, welche zu den Stationen 1, 2 bis 9 in Figur 3 korrespondieren. Die Symbole S1 bis S9 sind um aktivierbare Elemente 4, 4', 4" und 4''' ergänzt. Das aktivierbare Element 4 ist ein kleines Rechteck, in dessen Inneren ein Pluszeichen steht. Das Pluszeichen soll andeuten, dass man durch Anklicken dieses Elements der Anzeigefläche 3 ein Grafikobjekt 6 hinzufügen kann. Das Element 4' ist ein kleines Rechteck, in dessen Inneren ein Minuszeichen steht. Das Minuszeichen soll andeuten, dass man durch Anklicken dieses Elements ein Grafikobjekt 6 von der Anzeigefläche 3 entfernen kann. Mit dem aktivierbaren Element 4 wird eine Transitionsbedingung T abgefragt, mit dem Element 4' eine Verriegelungsbedingung, mit dem Element 4" eine Überwachungsbedingung V, und mit dem Element 4''' eine Aktion A.

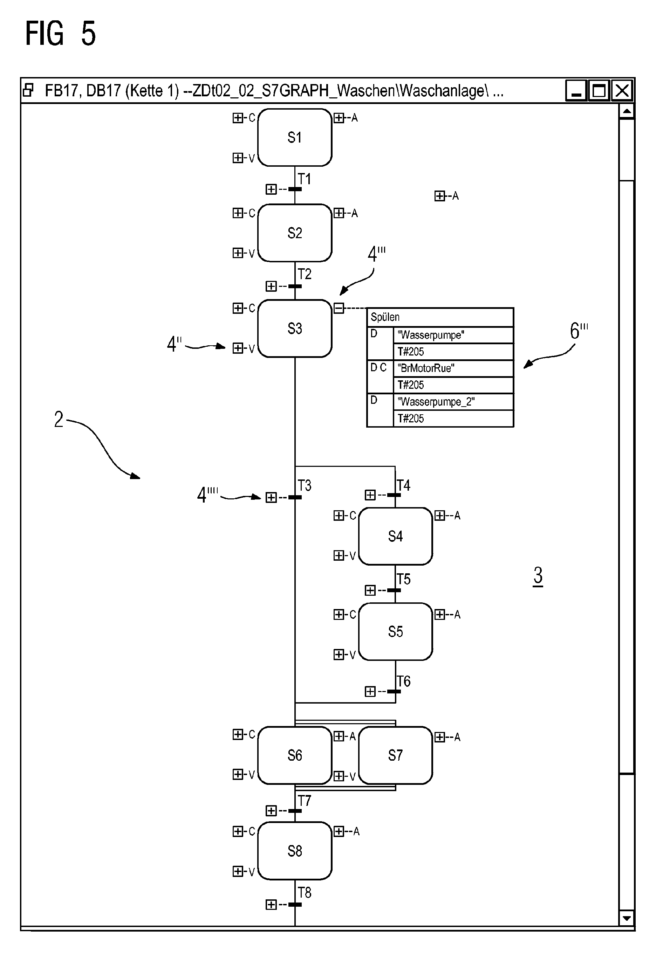

Klickt man mit dem Mauszeiger auf das Element 4"', so wird dieses Element aktiviert, und man erhält die Figur 5 mit dem zum aktivierbaren Element 4''' korrespondierenden Grafikobjekt 6'''. Da das Grafikobjekt 6''' ohne weiteres Zutun das Symbol "S4" partiell verdeckt hätte, werden alle Fensterinhalte unterhalb S3 nach unten verschoben. Dies ist daran zu erkennen, dass der Abstand zwischen den Symbolen "S3" und "T3" größer geworden ist.

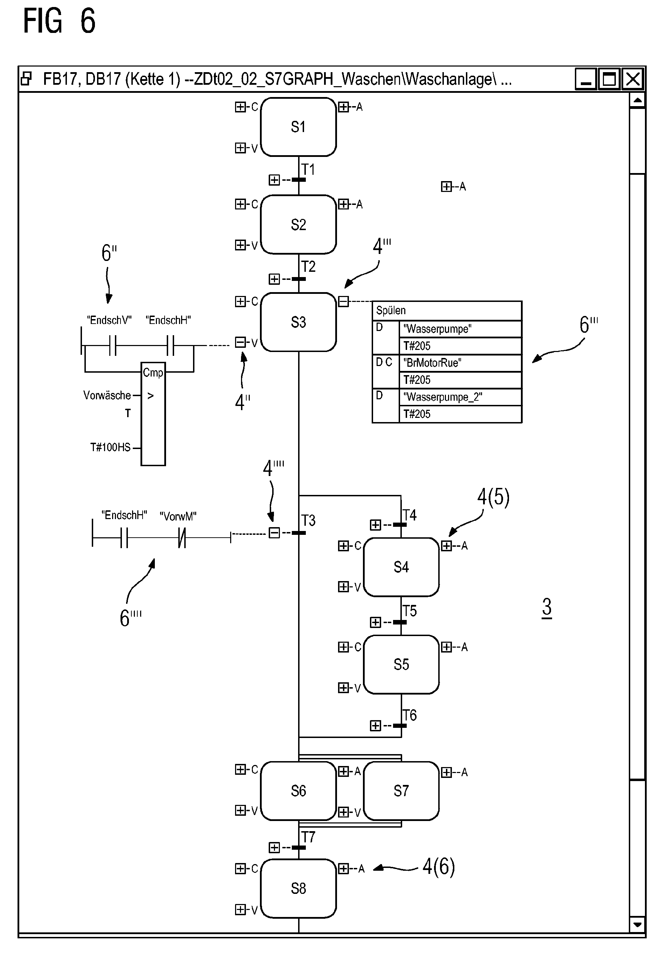

Klickt man anschließend mit der Maus auf das aktivierbare Element 4", und auch auf das links neben dem Symbol "T3" befindliche Element 4'''', so erhält man die Figur 6. Es sind zwei weitere Grafikobjekte 6" und 6'''' hinzugetreten, die zusammen mit dem Grafikobjekt 6''' den ursprünglichen Fensterinhalt von Figur 4 ergänzen. Die Ergänzung ist hierbei inhaltlicher Art, d.h. es liegt weiterhin ein einziges Fenster vor, das einen modifizierten Inhalt besitzt.

Entscheidet der Anwender, dass mindestens eines der Grafikobjekte 6'', 6''' und 6'''' nicht mehr benötigt werden, so kann er es durch einfaches Anklicken des jeweils zugehörigen aktivierbaren Elements 4", 4''' bzw. 4'''' zum Verschwinden bringen. Diese Möglichkeit wird dadurch auf der Anzeigefläche 3 zum Ausdruck gebracht, dass das jeweilige Element in seinem Inneren nunmehr ein Minuszeichen aufweist.

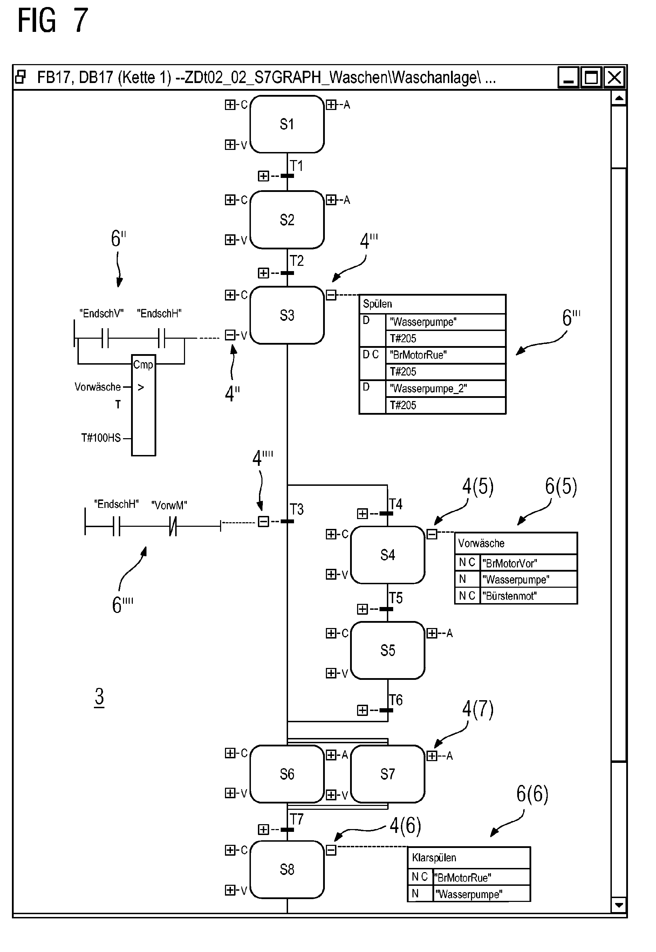

Klickt man nachfolgend auf die aktivierbaren Elemente 4⁽⁵⁾ und 4⁽⁶⁾, so treten die Grafikobjekte 6⁽⁵⁾ und 6⁽⁶⁾ hinzu, und man erhält Figur 7. Da für die Platzierung der Grafikobjekte 6⁽⁵⁾ und 6⁽⁶⁾ in Figur 6 genügend Platz war, müssten für deren Positionierung keine Fensterinhalte nach unten verschoben werden.

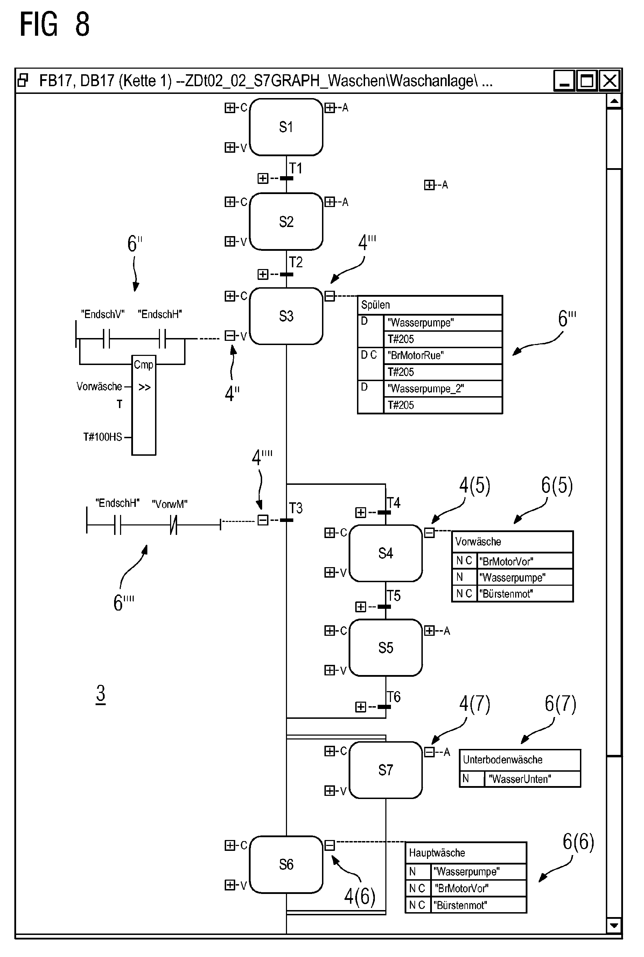

Klickt man bei Figur 7 auf das aktivierbare Element 4⁽⁷⁾, so erhält man durch Hinzufügung des Grafikobjekts 6⁽⁷⁾ die Figur 8. Da für die Positionierung des Grafikobjekts 6⁽⁷⁾ in Figur 7 kein freier Platz war, wurde mit der Positionierung des Grafikobjekts 6⁽⁷⁾ ein Teil des Fensters 7 ab dem Symbol "S6" abwärts nach unten verschoben. Durch Scrollen des Fensterinhalts kann auch der weiter unten befindliche Teil des Fensterinhalts eingesehen werden.

Die vorstehenden Ausführungen zeigen, dass durch einfache Mausklicks auf die aktivierbaren Elemente der Anzeigefläche 3 Grafikinhalte hinzugefügt, oder von dieser entfernt werden können. Diese Vorgehensweise erlaubt ein flexibles Konfigurieren des gewünschten Fensterinhalts nach individuellen Wünschen des Anwenders und hilft, den Überblick über die zur Verfügung stehenden Informationen besser zu wahren.

## Patentansprüche

1. Verfahren zur grafischen Darstellung von Gegenständen und/oder technischen Prozessen auf einem Bildschirm (1), insbesondere einem Computerbildschirm, bei dem der Gegenstand und/oder der Prozess (2) auf einer Anzeigefläche (3) des Bildschirms (1) dargestellt wird, **dadurch** - **gekennzeichnet** , dass die Anzeigefläche (3) mindestens ein mittels eines Eingabegeräts (5) aktivierbares Element (4) aufweist, und durch die Aktivierung des Elements (4) der Inhalt der Anzeigefläche (3) um ein Grafikobjekt (6) ergänzt wird.

2. Verfahren nach Anspruch 1, **dadurch ge** - **kennzeichnet** , dass die Anzeigefläche (3) und das Grafikobjekt (6) denselben Gegenstand und/oder denselben Prozess (2) zum Inhalt haben.

3. Verfahren nach Anspruch 1 oder 2, **dadurch gekennzeichnet , dass** eine Aktivierung durch Anklicken des Elements (4) mittels einer Computermaus (7) erfolgt, und dass nach erneutem Anklicken des Elements (4) das Grafikobjekt (6) verschwindet.

4. Verfahren nach einem der Ansprüche 1 bis 3, **da** - **durch gekennzeichnet** , dass das Grafikobjekt (6) vom Benutzer modifiziert wird, nach erneutem Anklicken des Elements (4) das Grafikobjekt (6) verschwindet, und zukünftig der Inhalt der Anzeigefläche (3) durch Anklicken des Elements (4) mit dem modifizierten Grafikobjekt ergänzbar ist.

5. Verfahren nach einem der Ansprüche 1 bis 4, **da** - **durch gekennzeichnet** , dass die Ergänzung der Anzeigefläche (3) derart erfolgt, dass mit der Positionierung des Grafikobjekts (6) innerhalb der Anzeigefläche (1) deren bisheriger Inhalt ab der Sollposition des Grafikobjekts (6) nach unten verschoben wird, wenn das Grafikobjekt (6) einen Teil des bisherigen Inhalts der Anzeigefläche (3) überlagern würde.

6. Verfahren nach einem der Ansprüche 1 bis 5, **da** - **durch gekennzeichnet** , dass der funktionsmäßige, organisatorische, und/oder zeitliche Ablauf eines Herstellungs- oder Arbeitsprozesses dargestellt wird.

7. Verfahren nach einem der Ansprüche 1 bis 6, **da** - **durch gekennzeichnet** , dass dass das Grafikobjekt den Gegenstand in einer anderen Ansicht im Vergleich zu der Anzeigefläche dargestellt, und/oder ein Detail des Gegenstandes zeigt.

8. Verfahren nach einem der Ansprüche 1 bis 7, **da** - **durch gekennzeichnet** , dass das Grafikobjekt einen Teil des in der Anzeigefläche dargestellten Gesamtprozesses und ggf. zu diesem Teil hinterlegte technische Informationen zeigt.

9. Computerprogramm, das direkt in den internen Speicher eines digitalen Computers geladen werden kann und Softwarecodeabschnitte umfasst, mit denen die Schritte gemäß einem der Ansprüche 1 bis 8 ausgeführt werden, wenn das Produkt auf einem Computer läuft.

10. Computerprogramm nach Anspruch 9, verkörpert auf einem Datenträger, abgelegt in einem Computerspeicher, oder übertragen mittels eines elektrischen Trägersignals.
